# EUROPEAN PATENT APPLICATION

(11) **EP 4 765 962 A1**
(43) Date of publication of application: **24.06.2026**
(21) Application number: 24876204.9
(22) Date of filing: 06.08.2024
(51) Int. Cl.: H04W 52/02, H04W 76/28

(54) **PDCCH MONITORING METHOD AND RELATED DEVICE**

(30) Priority: 12.10.2023 CN 202311330424
(71) Applicant: HUAWEI TECHNOLOGIES CO., LTD., Shenzhen 518129 (CN)
(72) Inventor: CAO, Youlong, Shenzhen, Guangdong 518129 (CN); QIN, Yi, Shenzhen, Guangdong 518129 (CN); FU, Yu, Shenzhen, Guangdong 518129 (CN); XU, Rui, Shenzhen, Guangdong 518129 (CN)
(74) Representative: MERH-IP Matias Erny Reichl Hoffmann Patentanwälte PartG mbB
(86) International application number: PCT/CN2024/110039
(87) International publication number: WO 2025/077384

(57) **Abstract**

A PDCCH monitoring method is used to reduce power consumption of a terminal device. The method in this application includes: obtaining a first DRX parameter used to configure a first DRX and a second DRX parameter used to configure a second DRX, where a start time of a first cycle period of the first DRX is t1, a start time of a second cycle period of the second DRX is t2, and t1 is earlier than t2; and when a time difference between t1 and t2 is less than a first threshold, initiating PDCCH monitoring at a time t3, where t3 is no later than t2 and is later than t1.

## Description

This application claims priority to Chinese Patent Application No. 202311330424.X, filed with the China National Intellectual Property Administration on October 12, 2023 and entitled "PDCCH MONITORING METHOD AND RELATED DEVICE", which is incorporated herein by reference in its entirety.

### TECHNICAL FIELD

This application relates to the communication field, and in particular, to a PDCCH monitoring method and a related device.

### BACKGROUND

In recent years, with continuous development of communication systems, data transmission latency has been continuously reduced while transmission capacities have significantly increased. This has accelerated the development of services that require high real-time performance and large data capacities. As users rely on electronic devices to run diverse services, ensuring quality of experience across these services has become a pressing challenge.

One method involves configuring a terminal device with multiple sets of discontinuous reception (discontinuous reception, DRX) parameters, which define on duration time (on duration time) for monitoring a physical downlink control channel (physical downlink control channel, PDCCH), thereby ensuring transmission of various services.

However, this method presents a drawback: since each DRX parameter set configures its own unique PDCCH monitoring occasion, the terminal device must monitor the PDCCH across all monitoring occasions configured using these DRX parameters, leading to increased power consumption of the terminal device.

### SUMMARY

This application provides a PDCCH monitoring method and a related device to reduce power consumption of a terminal device.

According to a first aspect, this application provides a PDCCH monitoring method. The method may be performed by a terminal device, or may be performed by a module (for example, a chip system) of a terminal device, or may be implemented by a logical node, a logical module, or software that can implement all or a part of functions of a terminal device. For ease of description, the following uses the terminal device as an example for description. The method includes:

The terminal device obtains a first DRX parameter and a second DRX parameter from a network device. In other words, the network device configures the first DRX parameter and the second DRX parameter for the terminal device. The first DRX parameter is used to configure a first DRX, and the second DRX parameter is used to configure a second DRX. The first DRX and the second DRX each include a cycle period, and each cycle period includes an on duration time (on duration time) and an off duration time. The terminal device monitors a PDCCH in the on duration time. A start time of the cycle period is also a start time of the on duration time included in the cycle period. A start time of a first cycle period of the first DRX is t1, a start time of a second cycle period of the second DRX is t2, and t1 is earlier than t2. The terminal device may further compare a time difference between t1 and t2. When the time difference between t1 and t2 is less than a first threshold, the terminal device initiates PDCCH monitoring at a time t3, where t3 is no later than t2 and is later than t1. Effectively, this delays the start time of PDCCH monitoring from t1 to t3, reducing a total duration of PDCCH monitoring.

In the PDCCH monitoring method provided in this application, when the time difference between the start time t1 of the first cycle period of the first DRX and the start time t2 of the second cycle period of the second DRX is less than the first threshold, the terminal device initiates PDCCH monitoring at the time t3, where t3 is no later than t2 and is later than t1. This enables the terminal device to delay the start time of the first cycle period, reducing an actual length of the first cycle period, and further reducing the time of PDCCH monitoring, thereby reducing power consumption of the terminal device.

In some optional implementations of the first aspect, the time t3 may be equal to the time t2. In this case, the start time of the first cycle period is actually delayed to the time t2.

In this application, if the time t3 is equal to the time t2, PDCCH monitoring for both the first DRX and the second DRX starts at the time t2. Because the start time of the second cycle period of the second DRX is t2, it means that the terminal device would have originally needed to initiate PDCCH monitoring from t2. Having t3 equal to t2 not only maximizes a delay of the start time of PDCCH monitoring but also ensures that the second DRX remains unaffected, thereby further reducing the power consumption of the terminal device.

In some optional implementations of the first aspect, t3 = t1 + P, where P is configured by the network device for the terminal device. P represents a delay period, that is, a period by which PDCCH monitoring is delayed. A value of P may be determined by the network device based on an actual application requirement, and is related to factors such as service period, data packet size, and tolerance to transmission latency. This is not specifically limited herein.

In this application, the time t3 may take various possible values. The time t3 may be equal to t2, or may be between t1 and t2, and may be flexibly selected based on an actual application requirement, thereby enriching implementations and application scenarios of the technical solutions in this application.

In some optional implementations of the first aspect, the second cycle period is a cycle period of the second DRX and that is closest to the start time t1 of the first cycle period. It should be noted that the closest herein refers to the smallest temporal distance between the start times of the two cycle periods.

In this application, by ensuring that the start time of the first cycle period is temporally closest to the start time of the second cycle period, this prevents a scenario where a large gap, when comparing between start times of different cycle periods, might span across cycle periods. Such spanning could cause the on duration of the skipped cycle period not to be activated, meaning that the terminal device would not monitor the PDCCH during the on duration time of that skipped cycle period, potentially resulting in failure to transmit data corresponding to that on duration time. In other words, by ensuring that the start time of the first cycle period is temporally closest to the start time of the second cycle period, data transmission reliability is improved, thereby enhancing practicability of the technical solutions of this application.

In some optional implementations of the first aspect, the first threshold may be configured by the network device for the terminal device. A value of the first threshold may be determined by the network device based on an actual application requirement, and is related to factors such as service period, data packet size, and tolerance to transmission latency. This is not specifically limited herein.

In some optional implementations of the first aspect, the first threshold may be configured by the network device in the first DRX parameter and the second DRX parameter. In other words, both the first DRX parameter and the second DRX parameter include the first threshold. Alternatively, the first threshold may be configured by the network device in the first DRX parameter.

In some optional implementations of the first aspect, the first threshold may also be configured by the network device in separate radio resource control (radio resource control, RRC) signaling. In this case, the first threshold is valid for both the first DRX and the second DRX that are configured for the terminal device, and the first threshold is a threshold shared by the first DRX and the second DRX.

In this application, the first threshold is configured by the network device for the terminal device. There are a plurality of possible specific implementations. The first threshold may be configured in separate RRC signaling or a DRX parameter. When configured in the DRX parameter, the first threshold may be configured in multiple sets of DRX parameters or in a specific set of DRX parameters. This further enriches implementations of the technical solutions of this application, offering greater flexibility and broader practicability of the technical solutions of this application.

According to a second aspect, this application provides a PDCCH monitoring method. The method is applied to a communication system, and the communication system includes a network device and a terminal device. Apart of the method that is performed by the terminal device may alternatively be performed by a module (for example, a chip system) of the terminal device, or may be implemented by a logical node, a logical module, or software that can implement all or a part of functions of the terminal device. A part of the method that is performed by the network device may alternatively be performed by a module (for example, a chip system) of the network device, or may be implemented by a logical node, a logical module, or software that can implement all or a part of functions of the network device. For ease of description, the following uses the terminal device and the network device as an example for description. The method includes:

The network device sends a first DRX parameter and a second DRX parameter to the terminal device, where the first DRX parameter is used to configure a first DRX, and the second DRX parameter is used to configure a second DRX. A start time of a first cycle period of the first DRX is t1, a start time of a second cycle period of the second DRX is t2, and t1 is earlier than t2. The terminal device obtains the first DRX parameter and the second DRX parameter from the network device, and when a time difference between t1 and t2 is less than a first threshold, initiates PDCCH monitoring at a time t3, where t3 is no later than t2 and is later than t1.

In some optional implementations of the second aspect, the network device configures P for the terminal device, and t3 = t1 + P. P represents a delay period of PDCCH monitoring.

In some optional implementations of the second aspect, the network device configures the first threshold for the terminal device. A value of the first threshold may be determined by the network device based on an actual application requirement, and is related to factors such as service period, data packet size, and tolerance to transmission latency. This is not specifically limited herein.

In some optional implementations of the second aspect, the first threshold may be configured by the network device in the first DRX parameter and the second DRX parameter. In other words, both the first DRX parameter and the second DRX parameter include the first threshold. Alternatively, the first threshold may be configured by the network device in the first DRX parameter.

In some optional implementations of the second aspect, the first threshold may also be configured by the network device in separate RRC signaling. In this case, the first threshold is valid for both the first DRX and the second DRX that are configured for the terminal device, and the first threshold is a threshold shared by the first DRX and the second DRX.

Beneficial effect of the second aspect or any possible implementation of the second aspect is similar to that of the first aspect or any possible implementation of the first aspect. Details are not described herein again.

According to a third aspect, this application provides a PDCCH monitoring method. The method may be performed by a terminal device, or may be performed by a module (for example, a chip system) of a terminal device, or may be implemented by a logical node, a logical module, or software that can implement all or a part of functions of a terminal device. For ease of description, the following uses the terminal device as an example for description. The method includes:

The terminal device obtains a first DRX parameter and a second DRX parameter, where the first DRX parameter is used to configure a first DRX, and the second DRX parameter is used to configure a second DRX. For example, the first DRX parameter and the second DRX parameter are configured by the network device for the terminal device and sent to the terminal device. The terminal device may determine, by comparing a proportion of an overlapping period between a first on duration time of the first DRX and a second on duration time of the second DRX relative to the first on duration time with a second threshold, whether to monitor the PDCCH across the entire first on duration time. Specifically, when the proportion of the overlapping period occupying the first on duration time is greater than the second threshold, the terminal device skips PDCCH monitoring during a non-overlapping portion of the first on duration time with respect to the second on duration time. In other words, for the first on duration time, an actual monitoring period by the terminal device is the overlapping portion of the first on duration time with the second on duration time, instead of the entire first on duration time. This shortens a monitoring duration and reduces power consumption of the terminal device.

In this application, when the proportion of the overlapping period between the first on duration time and the second on duration time relative to the first on duration time is greater than the second threshold, the terminal device skips PDCCH monitoring during a non-overlapping portion of the first on duration time with respect to the second on duration time, thereby shortening the PDCCH monitoring duration and reducing the power consumption of the terminal device.

In some optional implementations of the third aspect, the second threshold is configured by the network device for the terminal device. Specifically, the network device may configure the second threshold in separate RRC signaling, and send the RRC signaling to the terminal device. In addition, a value of the second threshold may be determined by the network device based on an actual application requirement, and is related to factors such as service period, data packet size, and tolerance to transmission latency. This is not specifically limited herein.

According to a fourth aspect, this application provides a PDCCH monitoring method. The method is applied to a communication system, and the communication system includes a network device and a terminal device. A part of the method that is performed by the terminal device may alternatively be performed by a module (for example, a chip system) of the terminal device, or may be implemented by a logical node, a logical module, or software that can implement all or a part of functions of the terminal device. A part of the method that is performed by the network device may alternatively be performed by a module (for example, a chip system) of the network device, or may be implemented by a logical node, a logical module, or software that can implement all or a part of functions of the network device. For ease of description, the following uses the terminal device and the network device as an example for description. The method includes:

The network device sends a first DRX parameter and a second DRX parameter to the terminal device, where the first DRX parameter is used to configure a first DRX, and the second DRX parameter is used to configure a second DRX. The terminal device obtains the first DRX parameter and the second DRX parameter from the network device. When a proportion of an overlapping period between a first on duration time of the first DRX and a second on duration time of the second DRX relative to the first on duration time is greater than a second threshold, the terminal device skips PDCCH monitoring during a non-overlapping portion of the first on duration time with respect to the second on duration time.

In some optional implementations of the fourth aspect, the network device configures the second threshold for the terminal device. Specifically, the network device may configure the second threshold in separate RRC signaling, and send the RRC signaling to the terminal device. In addition, a value of the second threshold may be determined by the network device based on an actual application requirement, and is related to factors such as service period, data packet size, and tolerance to transmission latency. This is not specifically limited herein.

Beneficial effect of the fourth aspect or any possible implementation of the fourth aspect is similar to that of the third aspect or any possible implementation of the third aspect. Details are not described herein again.

According to a fifth aspect, this application provides a communication apparatus, which can implement a function of the terminal device in the method according to the first aspect, any possible implementation of the first aspect, the second aspect, or any possible implementation of the second aspect. The apparatus includes a corresponding unit or module configured to perform the method. The unit or module included in the apparatus can be implemented by software and/or hardware. The apparatus may be, for example, a terminal device, or may be a module (for example, a chip) of a terminal device, or may be a logical node, a logical module, or software that can implement all or a part of functions of a terminal device. Beneficial effect of this aspect is similar to that of the first aspect or any possible implementation of the first aspect. Details are not described herein again.

According to a sixth aspect, this application provides a communication apparatus, which can implement a function of the terminal device in the method according to the third aspect, the fourth aspect, any possible implementation of the third aspect, or any possible implementation of the fourth aspect. The apparatus includes a corresponding unit or module configured to perform the method. The unit or module included in the apparatus can be implemented by software and/or hardware. The apparatus may be, for example, a terminal device, or may be a module (for example, a chip) of a terminal device, or may be a logical node, a logical module, or software that can implement all or a part of functions of a terminal device.

Beneficial effect of this aspect is similar to that of the third aspect or any possible implementation of the third aspect. Details are not described herein again.

According to a seventh aspect, this application provides a communication apparatus, including a processor. The processor is coupled to a memory. The memory stores instructions. When the instructions are run on the processor, the communication apparatus is enabled to implement the method according to the first aspect, the third aspect, any possible implementation of the first aspect, or any possible implementation of the third aspect. The communication apparatus may be a terminal device, or may be a module (for example, a chip) of a terminal device, or may be a logical node, a logical module, or software that can implement all or a part of functions of a terminal device.

According to an eighth aspect, this application provides a computer-readable storage medium. The computer-readable storage medium stores instructions. When the instructions are run on a processor, the method according to the first aspect, the third aspect, any possible implementation of the first aspect, or any possible implementation of the third aspect is implemented.

According to a ninth aspect, this application provides a computer program product. When the computer program product is executed on a computer, the method according to the first aspect, the third aspect, any possible implementation of the first aspect, or any possible implementation of the third aspect is implemented.

Beneficial effect of any one of the seventh aspect to the ninth aspect is similar to those of the first aspect, any possible implementation of the first aspect, the third aspect, or any possible implementation of the third aspect. Details are not described herein again.

### BRIEF DESCRIPTION OF DRAWINGS

FIG. 1 is a diagram of a system architecture according to an embodiment of this application;
FIG. 2 is a diagram of a DRX mechanism according to an embodiment of this application;
FIG. 3 is a schematic flowchart of a PDCCH monitoring method according to an embodiment of this application;
FIG. 4 to FIG. 6 are diagrams of DRXs according to embodiments of this application;
FIG. 7 is another schematic flowchart of a PDCCH monitoring method according to an embodiment of this application;
FIG. 8 and FIG. 9 are diagrams of DRXs according to embodiments of this application;
FIG. 10 is a diagram of a structure of a communication apparatus according to an embodiment of this application; and
FIG. 11 is a diagram of another structure of a communication apparatus according to an embodiment of this application.

### DESCRIPTION OF EMBODIMENTS

Embodiments of this application provide a PDCCH monitoring method and a related device, to reduce power consumption of a terminal device.

The following describes embodiments of this application with reference to accompanying drawings. A person of ordinary skill in the art may learn that, with development of technologies and emergence of a new scenario, the technical solutions provided in embodiments of this application are also applicable to a similar technical problem.

In the specification, claims, and accompanying drawings of this application, the terms "first", "second", and so on are intended to distinguish between similar objects but do not necessarily indicate a specific order or sequence. It should be understood that the terms used in such a way are interchangeable in appropriate circumstances, which is merely a distinguishing manner that is used when objects having a same attribute are described in embodiments of this application. In addition, the terms "include", "contain" and any other variants mean to cover the non-exclusive inclusion, so that a process, method, system, product, or device that includes a series of units is not necessarily limited to those units, but may include other units not expressly listed or inherent to such a process, method, product, or device. In addition, "at least one" means one or more, and "a plurality of" means two or more. "And/or" describes an association relationship between associated objects, and represents that three relationships may exist. For example, A and/or B may represent the following cases: A exists alone, both A and B exist, and B exists alone, where A and B may be singular or plural. The character "/" generally indicates an "or" relationship between the associated objects. "At least one of the following items (pieces)" or a similar expression thereof indicates any combination of these items, including a single item (piece) or any combination of a plurality of items (pieces). For example, at least one item (piece) of a, b, or c may indicate: a, b, c, a and b, a and c, b and c, or a, b, and c, where a, b, and c may be singular or plural.

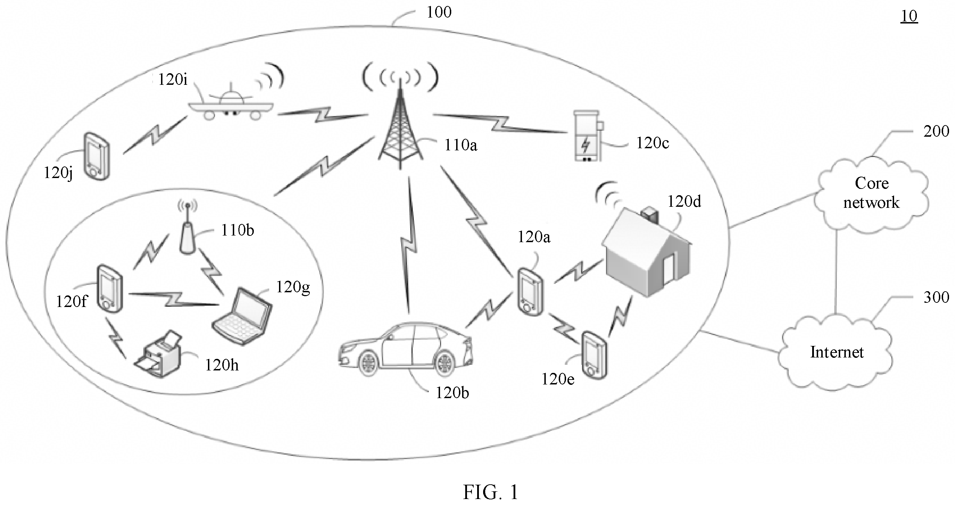

FIG. 1 is a diagram of a system architecture according to an embodiment of this application. It may be understood that FIG. 1 is a diagram of a possible and non-limiting system.

As shown in FIG. 1, a communication system 10 includes a radio access network (radio access network, RAN) 100 and a core network (core network, CN) 200. The RAN 100 includes at least one RAN node (for example, 110a and 110b in FIG. 1, which are collectively referred to as 110) and at least one terminal device (for example, 120a to 120j in FIG. 1, which are collectively referred to as 120). The RAN 100 may further include another RAN node, for example, a wireless relay device and/or a wireless backhaul device (not shown in FIG. 1). The terminal device 120 is connected to the RAN node 110 in a wireless manner. The RAN node 110 is connected to the core network 200 in a wireless or wired manner. A core network device in the core network 200 and the RAN node 110 in the RAN 100 may respectively be different physical devices, or may be a same physical device that integrates a logical function of the core network and a logical function of the radio access network. This is not specifically limited herein.

The RAN 100 may be a cellular system related to the 3rd generation partnership project (3rd generation partnership project, 3GPP), for example, a 4G mobile communication system, a 5G mobile communication system, or a future-oriented evolved system (for example, a 6G mobile communication system). The RAN 100 may alternatively be an open access network (open RAN, O-RAN or ORAN), a cloud radio access network (cloud radio access network, CRAN), or a wireless fidelity (wireless fidelity, Wi-Fi) system. The RAN 100 may alternatively be a communication system that integrates two or more of the foregoing systems.

The RAN node 110 may also sometimes be referred to as an access network device, a RAN entity, an access node, or the like, and forms a part of the communication system, to help the terminal implement radio access. The RAN node 110 may also be expressed differently, such as a network device. In this application, unless otherwise specified, the network device is used for description below. A plurality of RAN nodes 110 in the communication system 10 may be nodes of a same type, or may be nodes of different types. This is not specifically limited herein. In some scenarios, roles of the RAN node 110 and the terminal device 120 are relative. For example, the network element 120i in FIG. 1 may be a helicopter or an uncrewed aerial vehicle, and may be configured as a mobile base station. For the terminal device 120j that accesses the RAN 100 through the network element 120i, the network element 120i is a base station. However, for a base station 110a, the network element 120i is a terminal device. The RAN node 110 and the terminal device 120 are sometimes referred to as communication apparatuses. For example, the network elements 110a and 110b in FIG. 1 may be understood as communication apparatuses having a base station function, and the network elements 120a to 120j may be understood as communication apparatuses having a terminal function.

In a possible scenario, the RAN node may be a base station (base station), an evolved NodeB (evolved NodeB, eNodeB), an access point (access point, AP), a transmission reception point (transmission reception point, TRP), a next generation NodeB (next generation NodeB, gNB), a next generation base station in a 6th generation (6th generation, 6G) mobile communication system, a base station in a future mobile communication system, an access node in a Wi-Fi system, or the like. The RAN node may be a macro base station (for example, 110a in FIG. 1), a micro base station or an indoor station (for example, 110b in FIG. 1), a relay node or a donor node, or a radio controller in a CRAN scenario. Optionally, the RAN node may alternatively be a server, a wearable device, a vehicle, a vehicle-mounted device, or the like. For example, an access network device in a vehicle-to-everything (vehicle-to-everything, V2X) technology may be a roadside unit (roadside unit, RSU). It should be noted that all or a part of functions of the RAN node in this application may alternatively be implemented by using a software function running on hardware, or may be implemented by using an instantiated virtualization function on a platform (for example, a cloud platform). The RAN node in this application may alternatively be a logical node, a logical module, or software that can implement all or a part of the functions of the RAN node. This is not specifically limited herein.

In another possible scenario, a plurality of RAN nodes coordinate to assist the terminal device in implementing wireless access, and different RAN nodes separately implement a part of functions of a base station. For example, the RAN node may be a central unit (central unit, CU), a distributed unit (distributed unit, DU), a CU-control plane (control plane, CP), a CU-user plane (user plane, UP), a radio unit (radio unit, RU), or the like. The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may alternatively have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of a software module and a hardware module.

The terminal device may also be referred to as a terminal, user equipment (user equipment, UE), a mobile station, a mobile terminal, or the like. The terminal may be widely used in various scenarios, for example, device-to-device (device-to-device, D2D), vehicle-to-everything (vehicle-to-everything, V2X) communication, machine-type communication (machine-type communication, MTC), internet of things (internet of things, IOT), virtual reality, augmented reality, industrial control, autonomous driving, telemedicine, smart grid, smart furniture, smart office, smart wearable, smart transportation, and smart city. The terminal may be a mobile phone, a tablet computer, a computer with a wireless transceiver function, a wearable device, a vehicle, an uncrewed aerial vehicle, a helicopter, an airplane, a ship, a robot, a robot arm, a smart home device, or the like. A form of the terminal device is not limited in embodiments of this application. In addition, all or a part of functions of the terminal device in this application may alternatively be implemented by using a software function running on hardware, or may be implemented by using an instantiated virtualization function on a platform (for example, a cloud platform). The terminal device in this application may alternatively be a logical node, a logical module, or software that can implement all or a part of the functions of the terminal device. This is not specifically limited herein.

In this application, "sending information to ... (for example, a terminal device)" may be understood as that a destination end of the information is the terminal device, and may include directly or indirectly sending the information to the terminal device. "Receiving information from... (for example, a terminal device)" may be understood as that a source end of the information is the terminal device, and may include directly or indirectly receiving the information from the terminal device. Information may undergo necessary processing, for example, a format change, between the source end for sending the information and the destination end. However, the destination end may understand valid information from the source end. A similar expression in this application may be understood similarly, and details are not described herein again.

The following briefly describes an application background of the PDCCH monitoring method provided in embodiments of this application.

With development of communication technologies, data transmission latency is continuously reduced, a transmission capacity is increasing, and requirements of services with strong real-time performance and high data capacity requirements are also increasing. In addition, these services are developed in a multi-modal manner. Multi-modal means that services of a plurality of dimensions are provided, for example, services of dimensions such as vision, hearing, touch, and kinesthesia. The services in this mode can provide users with all-round interaction experience and can be widely used.

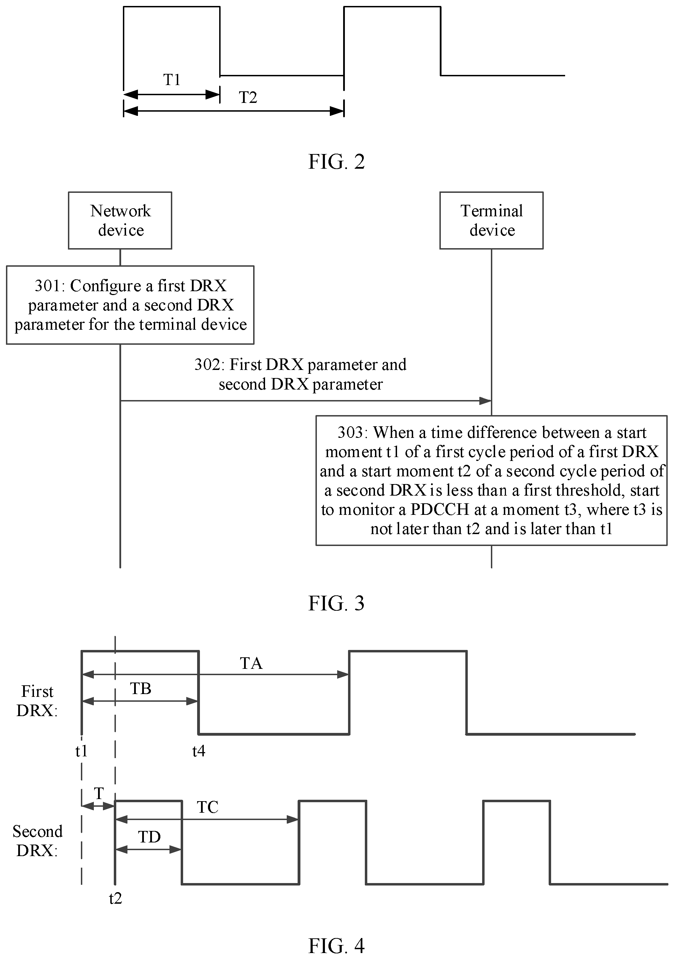

For the multi-modal services, the terminal device configures a plurality of DRXs for power consumption consideration, and the plurality of DRXs are respectively used to match services of corresponding modes. The following briefly describes a DRX mechanism with reference to a diagram. FIG. 2 is a diagram of a DRX mechanism according to an embodiment of this application.

In the DRX mechanism, a terminal device may determine a DRX cycle based on a DRX parameter configured by a network device, and periodically monitor a PDCCH. As shown in FIG. 2, in a DRX cycle (T2 shown in FIG. 2), a user needs to monitor the PDCCH only in part of the cycle (T1 shown in FIG. 2). In a conventional DRX mechanism, T1 shown in FIG. 2 is referred to as on duration time. The terminal device monitors the PDCCH in the on duration time, and in off duration time, remains in a sleep state and skips monitoring the PDCCH.

It should be noted that one DRX is used as an example in FIG. 2. In the PDCCH monitoring method provided in embodiments of this application, the network device configures a plurality of DRXs for one terminal device, and the plurality of DRXs have different cycle periods.

The following describes the PDCCH monitoring method provided in embodiments of this application with reference to a diagram.

For ease of understanding and description, the following describes the method in embodiments of this application by using interaction between the terminal device and the network device as an example. However, this should not constitute any limitation on an execution body of the method in embodiments of this application. For example, the method performed by the terminal device may alternatively be performed by a module (for example, a circuit, a chip, or a chip system) of the terminal device, or may be implemented by a logical node, a logical module, or software that can implement all or a part of functions of the terminal device. The method performed by the network device may alternatively be performed by a module (for example, a circuit, a chip, or a chip system) of the network device, or may be implemented by a logical node, a logical module, or software that can implement all or a part of functions of the network device.

FIG. 3 is a schematic flowchart of a PDCCH monitoring method according to an embodiment of this application. The method includes the following steps.

301: A network device configures a first DRX parameter and a second DRX parameter for a terminal device.

The network device may configure corresponding DRX parameters for different services based on features of service patterns of the terminal device. The DRX parameters are used to configure DRXs. Specifically, the first DRX parameter includes a first cycle parameter, a first on duration time parameter, and a first slot offset (slot offset) parameter. The first cycle parameter indicates a length of each cycle period of a first DRX, the first on duration time parameter indicates a length of each on duration time of the first DRX, and the first slot offset is used to determine a start position or a start time of the cycle period of the first DRX. In addition, the start position is also a start position of the on duration time of the first DRX. In other words, each cycle period starts from the on duration time.

Similarly, the second DRX parameter includes a second cycle parameter, a second on duration time parameter, and a second slot offset parameter. The second cycle parameter indicates a length of each cycle period of a second DRX, the second on duration time parameter indicates a length of each on duration time of the second DRX, and the second slot offset parameter is used to determine a start position of the cycle period of the second DRX. Details are not described herein again.

For example, it is assumed that services performed by the terminal device include a video service and a haptic service, a frame rate of the video service is 60 frames per second (frames per second, FPS), and a packet frequency of the haptic service is 100 hertz (Hz). The network device may configure the length of the cycle period in the first DRX parameter to 1/60s, and configure the length of the on duration time to 10 ms, to match the video service; and may configure the length of the cycle period in the second DRX parameter to 10 ms, and configure the length of the on duration time to 4 ms, to match the haptic service.

302: The terminal device obtains the first DRX parameter and the second DRX parameter from the network device.

After configuring the first DRX parameter and the second DRX parameter, the network device may carry different DRX parameters in different RRC signaling and send them to the terminal device. For example, the first DRX parameter is carried in the first RRC signaling, and the second DRX parameter is carried in the second RRC signaling. The terminal device receives and parses the RRC signaling, and obtains the first DRX parameter and the second DRX parameter from the RRC signaling.

The terminal device configures the first DRX based on the first DRX parameter, where a start time of a first cycle period of the first DRX is t1, and the first cycle period is a specific cycle period of the first DRX. Similarly, the terminal device configures the second DRX based on the second DRX parameter, where a start time of a second cycle period of the second DRX is t2, and the second cycle period is a specific cycle period of the second DRX. t1 is earlier than t2.

In some optional implementations, a relationship between the second cycle period and the first cycle period meets the following condition: The second cycle period is a cycle period of the second DRX and that is closest to the start time of the first cycle period. The closest herein refers to the smallest temporal distance between the start times of the two cycle periods. For clarity of description, refer to FIG. 4. FIG. 4 is a diagram of DRXs according to an embodiment of this application.

In the embodiment shown in FIG. 4, a cycle period is represented by a group of an upward segment and a downward segment. In the embodiment shown in FIG. 4, two cycle periods of a first DRX and three cycle periods of a second DRX are shown. The upward segment represents configured an on duration time, and the downward segment represents configured an off duration time. If a first cycle period of the first DRX is TA and a start time of the first cycle period is t1, then in the second DRX, a cycle period closest to the time t1 is TC. In other words, a time difference between a start time t2 of the cycle period TC and t1 is less than a time difference between a start time of any of other cycle periods of the second DRX and t1. This means that the second cycle period is TC. In addition, as shown in FIG. 4, the start time t1 of the first cycle period is earlier than the start time t2 of the second cycle period.

In this application, by ensuring that the start time of the first cycle period is temporally closest to the start time of the second cycle period, this prevents a scenario where a large gap, when comparing between start times of different cycle periods, might span across cycle periods. Such spanning could cause the on duration of the skipped cycle period not to be activated, meaning that the terminal device would not monitor the PDCCH during the on duration time of that skipped cycle period, potentially resulting in failure to transmit data corresponding to that on duration time. In other words, by ensuring that the start time of the first cycle period is temporally closest to the start time of the second cycle period, data transmission reliability is improved, thereby enhancing practicability of the technical solutions of this application.

303: When a time difference between the start time t1 of the first cycle period of the first DRX and the start time t2 of the second cycle period of the second DRX is less than a first threshold, the terminal device initiates PDCCH monitoring at a time t3. t3 is no later than t2 and is later than t1.

The terminal device may further obtain the first threshold, and determine, by comparing the first threshold with the time difference between the start time t1 of the first cycle period and the start time t2 of the second cycle period of the second DRX, whether to delay a time of PDCCH monitoring of the first DRX. The first threshold is configured by the network device for the terminal device. There are a plurality of possible specific implementations, which are separately described below.
1. The first threshold is a threshold shared by the first DRX and the second DRX.

The shared threshold means a threshold that is valid for both the first DRX and the second DRX. During actual application, determining to delay a time of initiating PDCCH monitoring (that is, a start time of PDCCH monitoring) for either the first DRX or the second DRX means comparing a time difference between start times of different cycle periods with the first threshold. In this case, there are a plurality of possible manners for the network device to configure the first threshold. The first threshold may be configured in separate RRC signaling or in the first DRX parameter and the second DRX parameter. This is not specifically limited herein.

Configuring the first threshold in the separate RRC signaling means that the first threshold is not in a same RRC signaling field as the first DRX parameter or the second DRX parameter. Instead, the first threshold is carried in a separate RRC signaling field. When the network device sends the separate RRC signaling to the terminal device, it means that the first threshold carried in the RRC signaling is a shared threshold.

In addition, configuring the first threshold in the first DRX parameter and the second DRX parameter means that both the first DRX parameter and the second DRX parameter include the first threshold, and the first threshold is valid for both the first DRX and the second DRX.

2. The first threshold is a threshold for the first DRX.

In this case, the network device configures the first threshold in the first DRX parameter, which means that the start time of the cycle period of the first DRX is earlier than the start time of the second DRX. During determining whether to delay a start time of PDCCH monitoring of the first DRX, a time difference between start times of cycle periods of different DRXs is compared with the first threshold. The first threshold is used only to determine whether to delay the start time of PDCCH monitoring of the first DRX, and cannot be used to determine whether to delay a start time of PDCCH monitoring of another DRX.

In conclusion, in this embodiment of this application, the first threshold is configured by the network device for the terminal device. There are a plurality of possible specific implementations. The first threshold may be configured in separate RRC signaling, or may be configured in the DRX parameter. In the solution in which the first threshold is configured in the DRX parameter, the first threshold may be configured not only in a plurality of DRX parameters, but also in a specific DRX parameter. This further enriches implementations of the technical solutions of this application, and improves flexibility and practicability of the technical solutions of this application.

It should be further noted that, regardless of which configuration manner is used, a value of the first threshold may be determined by the network device based on an actual application requirement, and is related to factors such as service cycle, data packet size, and tolerance to transmission delay. This is not specifically limited herein. Further, in some optional implementations, if a service cycle is longer, or a data amount of a data packet is smaller, or tolerance to transmission latency is higher, the first threshold may be set to a higher value.

For example, it is assumed that a cloud game service includes a video stream and a corresponding audio stream, where an arrival cycle of the video stream is 1/60s, a size of a corresponding video frame is 500,000 bits, and tolerable latency is 15 ms. A cycle of the audio service is 10 ms, a size of an audio data packet is 1000 bits, and tolerable latency is 15 ms. In this case, the length of the cycle period of the first DRX may be configured as 10 ms, and the length of the on duration time may be configured as 1 ms, to correspond to the audio stream. The length of the cycle period of the second DRX is 1/60s, and the length of the on duration time is 5 ms, to correspond to the video stream. In this case, the value of the first threshold may be set to 1 ms. In other words, when the time difference between the start time t1 of the first cycle period of the first DRX and the start time t2 of the second cycle period of the second DRX is less than 1 ms, monitoring of the audio stream may be delayed. Compared with the tolerable latency of 15 ms, the 1 ms delay has a smaller impact on user experience.

It should be further noted that, in the example, an example in which the first threshold is time in ms is used. During actual application, the first threshold may alternatively be time represented by slots or symbols (symbols). This is not specifically limited herein.

When the time difference between the start time t1 of the first cycle period of the first DRX and the start time t2 of the second cycle period of the second DRX is less than the first threshold, the terminal device initiates PDCCH monitoring at the time t3, where t3 is no later than t2 and is later than t1. In other words, this delays the start time of PDCCH monitoring from t1 to t3, reducing a total duration of PDCCH monitoring.

With reference to FIG. 4, the following further describes how to delay the start time of PDCCH monitoring in this embodiment of this application. As shown in FIG. 4, it is assumed that the first cycle period of the first DRX is TA and includes first on duration time TB. The second cycle period of the second DRX is TC, including second on duration time TD. t1 and t2 respectively represent the start time of the first cycle period TA and the start time of the second cycle period TC.

The terminal device determines that the time difference between t1 and t2 is T, and determines, when T is less than the first threshold, to delay the start time of PDCCH monitoring. In other words, the terminal device originally needs to initiate PDCCH monitoring at the time t1, and total monitoring duration is TB, that is, from t1 to t4. Now, the terminal device initiates PDCCH monitoring at the time t3, and total monitoring duration is from t3 to t4. Actual duration of on duration time is shorter than the configured on duration time.

t3 is no later than t2 and is later than t1, which means that a value range of the time t3 is (t1, t2], that is, t3 is after t1 and before t2 or equal to t2. In other words, in this embodiment of this application, there are a plurality of possible values of t3, which are separately described as follows.

In some optional implementations, the time t3 is equal to the time t2, that is, the start time of the first cycle period is actually delayed to the time t2. In the embodiment shown in FIG. 4, the terminal device initiates PDCCH monitoring from the time t2, which does not affect monitoring the PDCCH by the second on duration time TD of the second DRX, and can minimize duration of monitoring the PDCCH of the first DRX, thereby minimizing power consumption of the terminal device without affecting another service.

In some optional implementations, t3 = t1 + P, where P is configured by the network device for the terminal device. P represents a delay period, that is, a period by which PDCCH monitoring is delayed. A value of P may be determined by the network device based on an actual application requirement, and is related to factors such as service period, data packet size, and tolerance to transmission latency. This is not specifically limited herein. Further, in some optional implementations, if a service cycle is longer, or a data amount of a data packet is smaller, or tolerance to transmission latency is higher, P may be set to a higher value.

For example, it is assumed that a cloud game service includes a video stream and a corresponding audio stream, where an arrival cycle of the video stream is 1/60s, a size of a corresponding video frame is 500,000 bits, and tolerable latency is 15 ms. A cycle of the audio service is 10 ms, a size of an audio data packet is 1000 bits, and tolerable latency is 15 ms. In this case, the length of the cycle period of the first DRX may be configured as 10 ms, and the length of the on duration time may be configured as 1 ms, to correspond to the audio stream. The length of the cycle period of the second DRX is 1/60s, and the length of the on duration time is 5 ms, to correspond to the video stream. In this case, the value of P may be set to 1 ms. In other words, when the time difference between the start time t1 of the first cycle period of the first DRX and the start time t2 of the second cycle period of the second DRX is less than 1 ms, monitoring the PDCCH that carries the audio stream may be delayed by 1 ms. Compared with the tolerable latency of 15 ms, the 1 ms delay has a smaller impact on user experience.

It should be further noted that, in the example, an example in which P is time in ms is used. During actual application, P may alternatively be time represented by slots or symbols. This is not specifically limited herein.

In this application, if the time t3 is equal to the time t2, PDCCH monitoring for both the first DRX and the second DRX starts at the time t2. Because the start time of the second cycle period of the second DRX is t2, it means that the terminal device would have originally needed to initiate PDCCH monitoring from t2. Having t3 equal to t2 not only maximizes a delay of the start time of PDCCH monitoring but also ensures that the second DRX remains unaffected, thereby further reducing the power consumption of the terminal device. In addition, the time t3 may take various possible values. The time t3 may be equal to t2, or may be between t1 and t2, and may be flexibly selected based on an actual application requirement, thereby enriching implementations and application scenarios of the technical solutions in this application.

It should be further noted that monitoring the PDCCH means that the terminal device continuously receives and stores a downlink signal sent by the network device. The first DRX and the second DRX are sharing DRXs, that is, the PDCCH monitored by the terminal device corresponds to the first DRX and the second DRX.

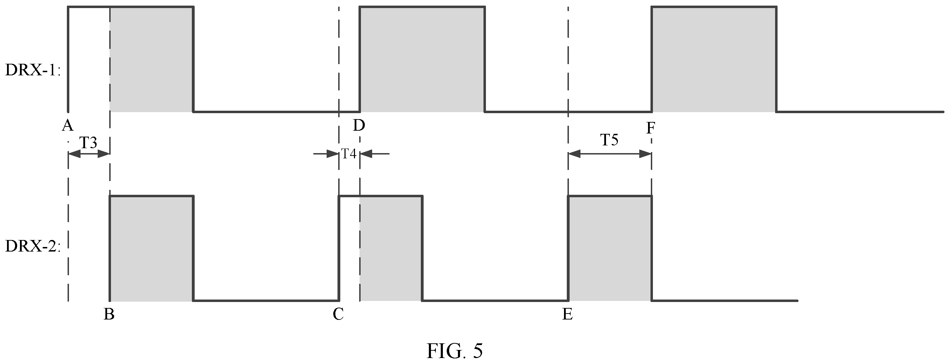

In the example, an example in which the start time of PDCCH monitoring is delayed in one cycle period of the first DRX is used for description. During actual application, the DRX has a plurality of cycle periods, and a start time of PDCCH monitoring may be delayed in each cycle period. The following provides a brief description with reference to a diagram. FIG. 5 is a diagram of DRXs according to an embodiment of this application.

In the embodiment shown in FIG. 5, one group of an upward segment and a downward segment represents one cycle period, the upward segment represents configured on duration time, and the downward segment represents configured off duration time. Both a DRX-1 and a DRX-2 shown in FIG. 5 include three cycle periods.

In the embodiment shown in FIG. 5, an implementation idea of whether to delay a start time of PDCCH monitoring in a cycle period is similar to the implementation in the foregoing embodiment. When a time difference between start times of different cycle periods is compared with a threshold, time differences may be compared with a same threshold or different thresholds. This is separately described as follows.

In some optional implementations, the DRX-1 and the DRX-2 correspond to a same threshold Q. For example, cycle periods that are of different DRXs and that have closest start times are used as an example. As shown in FIG. 5, a time difference between a start time A of a first cycle period of the DRX-1 and a start time B of a first cycle period of the DRX-2 is T3. When T3 is less than Q, the terminal device determines to delay an actual start time of PDCCH monitoring in the first cycle period of the DRX-1. In other words, the actual start time of PDCCH monitoring is later than the time A and no later than the time B. A time difference between a start time D of a second cycle period of the DRX-1 and a start time C of a second cycle period of the DRX-2 is T4. When T4 is less than Q, the terminal device determines to delay an actual start time of PDCCH monitoring in the second cycle period of the DRX-2. In other words, the actual start time of PDCCH monitoring is later than the time C and no later than the time D. A time difference between a start time F of a third cycle period of the DRX-1 and a start time E of a third cycle period of the DRX-2 is T5. In the embodiment shown in FIG. 5, it is assumed that T5 is not less than Q. Therefore, the terminal device does not delay an actual start time of PDCCH monitoring in the third cycle period of the DRX-2. In other words, for the third cycle period of the DRX-2, the terminal device initiates PDCCH monitoring from the time E based on the configuration.

For example, in a scenario in which the start time of PDCCH monitoring is delayed, for example, delayed to a start time of a cycle period of another DRX, in the examples in FIG. 5, actual time of PDCCH monitoring is shown by a gray upward segment in FIG. 5.

In some optional implementations, the DRX-1 and the DRX-2 correspond to different thresholds, that is, Q1 and Q2 respectively. For example, cycle periods that are of different DRXs and that have closest start times are used as an example. In the embodiment shown in FIG. 5, during determining whether to delay a start time of PDCCH monitoring, T3 is compared with Q1, and T4 and T5 are compared with Q2. If T3 is less than Q1, a start time of PDCCH monitoring in a first cycle period of the DRX-1 is delayed. If T4 is less than Q2, a start time of PDCCH monitoring in a second cycle period of the DRX-2 is delayed. If T5 is less than Q2, a start time of PDCCH monitoring in a third cycle period of the DRX-2 is delayed.

It should be further noted that, in the embodiment shown in FIG. 5, values of the thresholds Q, Q1, and Q2 are similar to the value of the first threshold in the foregoing embodiment. For other implementation details, refer to the foregoing related descriptions. Details are not described herein again.

In the foregoing examples, an example in which two DRXs are configured for the terminal device is used for description. During actual application, the terminal device may be further configured with more DRXs. In this scenario, an implementation idea of whether to delay a start time of PDCCH monitoring in a cycle period is similar to the implementation in the foregoing embodiment. The following uses an example in which the terminal device is configured with three DRXs for brief description.

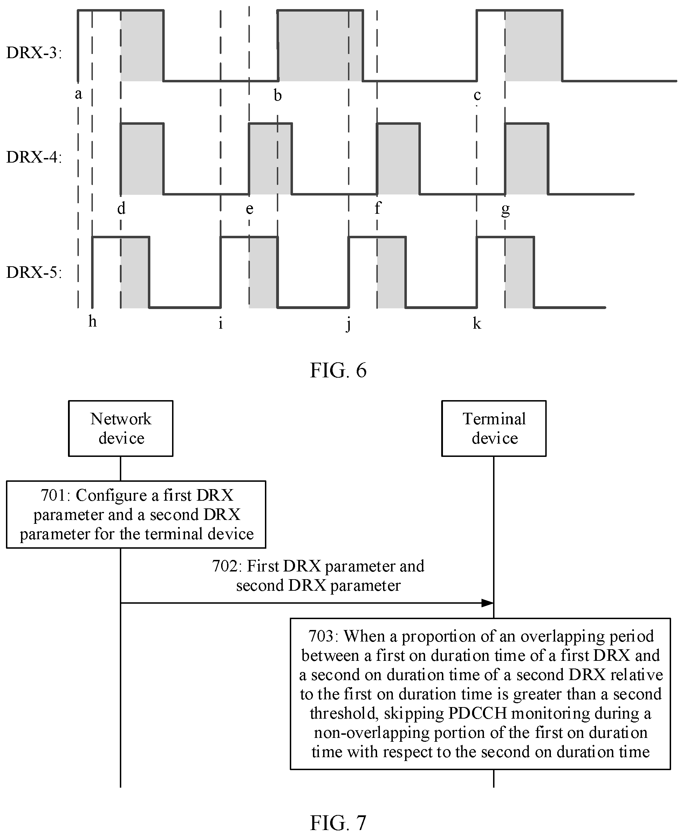

FIG. 6 is a diagram of DRXs according to an embodiment of this application.

In the embodiment shown in FIG. 6, one group of an upward segment and a downward segment represents one cycle period, the upward segment represents configured on duration time, and the downward segment represents configured off duration time. A DRX-3 shown in FIG. 6 includes three cycle periods, and start times configured for the three cycle periods are respectively a, b, and c. A DRX-4 includes four cycle periods, and start times configured for the four cycle periods are respectively d, e, f, and g. A DRX-5 includes four cycle periods, and start times configured for the four cycle periods are respectively h, i, j, and k.

In the embodiment shown in FIG. 6, when a time difference between start times of different cycle periods is compared with a threshold, time differences may be compared with a same threshold or different thresholds. This is separately described as follows.

In some optional implementations, the DRX-3 to the DRX-5 correspond to a same threshold Q. For example, cycle periods that are of different DRXs and that have closest start times are used as an example.

It is assumed that in the embodiment shown in FIG. 6, both a time difference between a and d and a time difference between a and h are less than Q. In this case, the terminal device may determine to delay actual start times of PDCCH monitoring in first cycle periods of the DRX-3 and DRX-5. The actual start time of PDCCH monitoring in the first cycle period of the DRX-3 is later than the time a and no later than the time d, and a value range of the actual start time of PDCCH monitoring in the first cycle period of the DRX-5 is later than the time h and no later than the time d.

It is assumed that in the embodiment shown in FIG. 6, a time difference between i and e is less than Q, and neither a time difference between i and b nor a time difference between e and b is less than Q. In this case, the terminal device may determine to delay an actual start time of PDCCH monitoring in a second cycle period of the DRX-5, but not to delay an actual start time of PDCCH monitoring in a second cycle period of the DRX-4. The actual start time of PDCCH monitoring in the second cycle period of the DRX-5 is later than the time i and no later than the time e.

It is assumed that in the embodiment shown in FIG. 6, a time difference between j and f is less than Q, and neither a time difference between b and j nor a time difference between f and c is less than Q. In this case, the terminal device may determine to delay an actual start time of PDCCH monitoring in a third cycle period of the DRX-5, but not to delay actual start times of PDCCH monitoring in a third cycle period of the DRX-4 and in a second cycle period of the DRX-3. The actual start time of PDCCH monitoring in the third cycle period of the DRX-5 is later than the time j and no later than the time f.

It is assumed that in the embodiment shown in FIG. 6, c is equal to k, and a time difference between c and g is less than Q. In this case, the terminal device may determine to delay actual start times of PDCCH monitoring in a third cycle period of the DRX-3 and a fourth cycle period of the DRX-5. The actual start times of PDCCH monitoring in the two cycle periods are later than the time c and no later than the time g.

For example, when an actual start time of PDCCH monitoring can be delayed, and the latest possible time is chosen as an actual start time of PDCCH monitoring in each cycle period. In the foregoing examples in FIG. 6, actual time of PDCCH monitoring is shown by gray upward segments in FIG. 6.

In some optional implementations, the DRX-3, the DRX-4, and the DRX-5 respectively correspond to different thresholds, that is, Q1, Q2, and Q3 respectively. For example, cycle periods that are of different DRXs and that have closest start times are used as an example. In the embodiment shown in FIG. 6, during determining whether to delay a start time of PDCCH monitoring in each cycle period of the DRX-3, a time difference between the start time of each cycle period of the DRX-3 and a start time of another cycle period is compared with Q1, and the start time is delayed only when the time difference is less than Q1. Similarly, for the DRX-4, a time difference between a start time of each cycle period of the DRX-4 and a start time of another cycle period is compared with Q2; for the DRX-5, a time difference between a start time of each cycle period of the DRX-5 and a start time of another cycle period is compared with Q3. A specific implementation is similar to the foregoing example, and details are not described herein again.

It should be further noted that, in the embodiment shown in FIG. 6, values of the thresholds are similar to the value of the first threshold in the foregoing embodiment. For other implementation details, refer to the foregoing related descriptions. Details are not described herein again.

In the foregoing descriptions, whether to delay a start time of PDCCH monitoring in a specific cycle period is determined by comparing a time difference between start times of different cycle periods with the first threshold. In the PDCCH monitoring method provided in embodiments of this application, whether to shorten the duration of monitoring the PDCCH may be alternatively determined based on an overlapping degree of on duration time of different DRXs. The following describes this solution.

FIG. 7 is a schematic flowchart of a PDCCH monitoring method according to an embodiment of this application. The method includes the following steps.

701: A network device configures a first DRX parameter and a second DRX parameter for a terminal device.

702: The terminal device obtains the first DRX parameter and the second DRX parameter from the network device.

Specific implementation processes of Step 701 and Step 702 are respectively similar to those of Step 301 and Step 302 in the embodiment shown in FIG. 3. For details, refer to the foregoing descriptions. Details are not described herein again.

703: When a proportion of an overlapping period between a first on duration time of a first DRX and a second on duration time of a second DRX relative to the first on duration time is greater than a second threshold, the terminal device skips PDCCH monitoring during a non-overlapping portion of the first on duration time with respect to the second on duration time.

The first on duration time is on duration time included in a first cycle period of the first DRX, and is time originally configured for PDCCH monitoring. Similarly, the second on duration time is on duration time included in a second cycle period of the second DRX.

The terminal device may further obtain the second threshold, and determine, by comparing the proportion of the overlapping period between the first on duration time and the second on duration time relative to the first on duration time with the second threshold, whether the first on duration time includes time of actually skipping PDCCH monitoring.

The second threshold is configured by the network device for the terminal device. Specifically, the network device configures the second threshold in separate RRC signaling, and send the separate RRC signaling to the terminal device. Configuring the second threshold in the separate RRC signaling means that the second threshold, the first DRX parameter, and the second DRX parameter are not in same RRC signaling, and the second threshold is carried in the separate RRC signaling. A value of the second threshold may be determined by the network device based on an actual application requirement, and is related to factors such as service period, data packet size, and tolerance to transmission latency. This is not specifically limited herein. Further, in some optional implementations, if a service cycle is longer, or a data amount of a data packet is smaller, or tolerance to transmission latency is higher, the second threshold may be set to a lower value.

When the proportion of the overlapping period between the first on duration time of the first DRX and the second on duration time of the second DRX relative to the first on duration time is greater than the second threshold, the terminal device skips PDCCH monitoring during a non-overlapping portion of the first on duration time with respect to the second on duration time.

For example, it is assumed that a cloud game service includes a video stream and a corresponding audio stream, where an arrival cycle of the video stream is 1/60s, a size of a corresponding video frame is 500,000 bits, and tolerable latency is 15 ms. A cycle of the audio service is 10 ms, a size of an audio data packet is 1000 bits, and tolerable latency is 15 ms. In this case, the length of the cycle period of the first DRX may be configured as 10 ms, and the length of the on duration time may be configured as 1 ms, to correspond to the audio stream. The length of the cycle period of the second DRX is 1/60s, and the length of the on duration time is 5 ms, to correspond to the video stream. In this case, the value of the second threshold may be set to 50%. In other words, when the proportion of the overlapping period between the first on duration time of the first DRX and the second on duration time of the second DRX relative to the first on duration time is greater than 50%, the terminal device skips PDCCH monitoring during a non-overlapping portion of the first on duration time with respect to the second on duration time. In this example, monitoring the audio stream is delayed by a maximum of 1 ms. Compared with the tolerable latency of 15 ms, the 1 ms delay has a smaller impact on user experience.

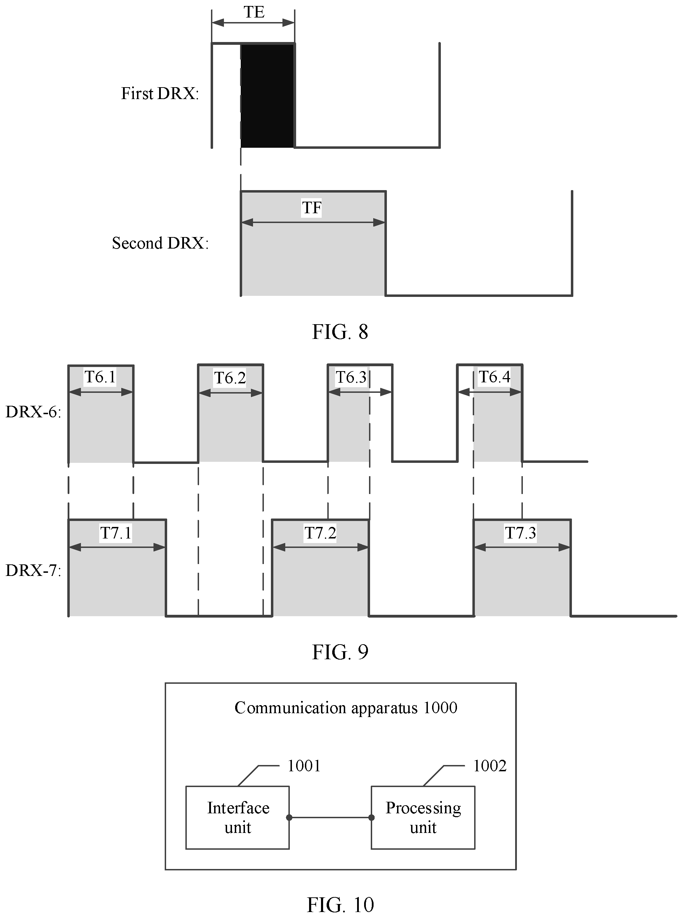

For clarity of description, refer to FIG. 8 and FIG. 9. FIG. 8 and FIG. 9 are diagrams of DRXs according to embodiments of this application. In the embodiments shown in FIG. 8 and FIG. 9, one group of an upward segment and a downward segment that are consecutive represents one cycle period, the upward segment represents a configured on duration time, and the downward segment represents a configured off duration time.

In the embodiment shown in FIG. 8, first on duration time of a first DRX is TE, second on duration time of a second DRX is TF, and it is assumed that a second threshold is 40%. An overlapping period between the first on duration time TE and the second on duration time TF is a black upward segment in FIG. 8, and a proportion of the overlapping period relative to the first on duration time TE is greater than 40%. Therefore, the terminal device determines to skip PDCCH monitoring during a non-overlapping portion of the first on duration time TE with respect to the second on duration time (that is, a white upward segment shown in FIG. 8). In this way, an actual length of the first on duration time of the first DRX is shortened, and power consumption of the terminal device is reduced.

In the embodiment shown in FIG. 8, an example in which a PDCCH is not monitored in a part of on duration time is used. During actual application, the PDCCH may not be monitored in a plurality of pieces of on duration time in one DRX. FIG. 9 is used as an example to describe this case.

In the embodiment shown in FIG. 9, it is assumed that a second threshold is 50%. For example, as shown in FIG. 9, an overlapping period of on duration time T6.1 of a DRX-6 and on duration time T7.1 of a DRX-7 is the full on duration time T6.1, a proportion of the overlapping period relative to the on duration time T6.1 is greater than the second threshold, and there is no non-overlapping period. In this case, the terminal device determines to monitor a PDCCH during the full on duration time T6.1.

For example, if on duration time T6.2 of the DRX-6 does not overlap any on duration time of the DRX-7, the terminal device determines to skip PDCCH monitoring during the full on duration time T6.2.

For example, on duration time T6.3 of the DRX-6 overlaps on duration time T7.2 of the DRX-7, and a proportion of an overlapping period relative to the on duration time T6.3 is greater than the second threshold. In this case, the terminal device determines to skip PDCCH monitoring during a non-overlapping portion of the first on duration time T6.3 with respect to the second on duration time T7.2 (that is, a white upward segment in the on duration time T6.3 shown in FIG. 9). In other words, time during which the terminal device actually monitors the PDCCH in the on duration time T6.3 is a gray upward segment in the on duration time T6.3 shown in FIG. 9, and actual duration is less than the length of the configured on duration time T6.3, thereby shortening an actual length of the on duration time and reducing power consumption of the terminal device.

For example, on duration time T6.4 of the DRX-6 overlaps on duration time T7.3 of the DRX-7, and a proportion of an overlapping period relative to the on duration time T6.4 is greater than the second threshold. In this case, the terminal device determines to skip PDCCH monitoring during a non-overlapping portion of the on duration time T6.4 with respect to the on duration time T7.3 (that is, a white upward segment in the on duration time T6.4 shown in FIG. 9). In other words, time during which the terminal device actually monitors the PDCCH in the on duration time T6.4 is a gray upward segment in the on duration time T6.4 shown in FIG. 9, and actual duration is less than the length of the configured on duration time T6.4, thereby shortening an actual length of the on duration time and reducing power consumption of the terminal device.

It should be noted that, in the foregoing examples in FIG. 9, actual time of PDCCH monitoring is shown by gray upward segments in FIG. 9.

It can be learned from the related descriptions of the embodiments shown in FIG. 7 to FIG. 9 that, in the PDCCH monitoring method provided in embodiments of this application, when the proportion of the overlapping period between the first on duration time and the second on duration time relative to the first on duration time is greater than the second threshold, the terminal device skips PDCCH monitoring during a non-overlapping portion of the first on duration time with respect to the second on duration time, thereby shortening the PDCCH monitoring duration and reducing the power consumption of the terminal device.

The following describes a related device provided in embodiments of this application.

FIG. 10 is a diagram of a structure of a communication apparatus according to an embodiment of this application. As shown in FIG. 10, the communication apparatus 1000 includes an interface unit 1001 and a processing unit 1002.

In some optional implementations, the interface unit 1001 is configured to obtain a first discontinuous reception DRX parameter and a second DRX parameter, where the first DRX parameter is used to configure a first DRX, a start time of a first cycle period of the first DRX is t1, the second DRX parameter is used to configure a second DRX, a start time of a second cycle period of the second DRX is t2, and t1 is earlier than t2. The processing unit 1002 is configured to: when a time difference between t1 and t2 is less than a first threshold, start to monitor a PDCCH at a time t3, where t3 is no later than t2 and is later than t1.

In some optional implementations, t3 is equal to t2.

In some optional implementations, t3 = t1 + P, where P is configured by the network device.

In some optional implementations, the second cycle period is a cycle period of the second RDX and that is closest to the start time of the first cycle period.

In some optional implementations, the first threshold is configured by the network device.

In some optional implementations, that the first threshold is configured by the network device includes: The first threshold is configured by the network device in the first DRX parameter and the second DRX parameter; or the first threshold is configured by the network device in the first DRX parameter.

In the foregoing optional implementations, the communication apparatus 1000 is configured to implement the functions implemented by the terminal device in the embodiments shown in FIG. 1 to FIG. 6. For details, refer to the foregoing descriptions. Details are not described herein again.

In some optional implementations, the communication apparatus 1000 may be further configured to implement functions implemented by the terminal device in the embodiments shown in FIG. 1, FIG. 7 to FIG. 9. In general, the following possible implementations are included.

In some optional implementations, the interface unit 1001 is configured to obtain a first discontinuous reception DRX parameter and a second DRX parameter, where the first DRX parameter is used to configure a first DRX, and the second DRX parameter is used to configure a second DRX. The processing unit 1002 is configured to: when a proportion of an overlapping period between a first on duration time of the first DRX and a second on duration time of the second DRX relative to the first on duration time is greater than a second threshold, skip PDCCH monitoring during a non-overlapping portion of the first on duration time with respect to the second on duration time.

In some optional implementations, the second threshold is configured by the network device.

For a specific implementation process of the foregoing implementations, refer to related descriptions in the embodiments shown in FIG. 1, FIG. 7 to FIG. 9. Details are not described herein again.

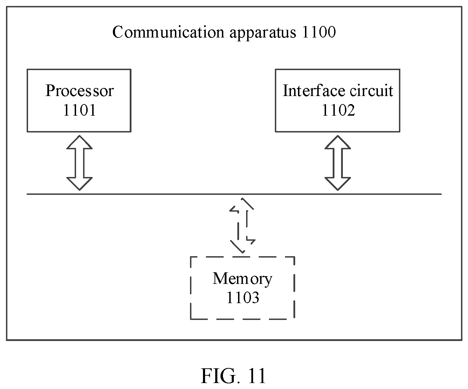

FIG. 11 is a diagram of a structure of a communication apparatus according to an embodiment of this application. As shown in FIG. 11, the communication apparatus 1100 includes a processor 1101 and an interface circuit 1102.

The processor 1101 and the interface circuit 1102 are coupled to each other. It may be understood that, the interface circuit 1102 may be a transceiver or an input/output interface. Optionally, the communication apparatus 1100 may further include a memory 1103 configured to store instructions executed by the processor 1101, store input data required by the processor 1101 to run the instructions, or store data generated after the processor 1101 runs the instructions.

When the communication apparatus 1100 is configured to implement the method shown in any one of FIG. 1 to FIG. 9, the processor 1101 is configured to implement a function of the processing unit 1002, and the interface circuit 1102 is configured to implement a function of the interface unit 1001.

When the communication apparatus is a chip used in a terminal, the terminal chip implements a function of the terminal device in the foregoing method embodiments. That the chip in the terminal receives information from a network device may be understood as that the information is first received by another module (for example, a radio frequency module or an antenna) in the terminal device, and then sent by the module to the chip in the terminal. That the chip in the terminal sends information to the network device may be understood as that the information is first sent to another module (for example, a radio frequency module or an antenna) in the terminal device, and then sent to the network device by the module.

When the communication apparatus is a chip used in a network device, the chip in the network device implements a function of the network device in the foregoing method embodiments. That the chip in the network device receives information from a terminal device may be understood as that the information is first received by another module (for example, a radio frequency module or an antenna) in the network device, and then sent by the module to the chip in the network device. That the chip in the network device sends information to the terminal device may be understood as that the information is delivered to another module (for example, a radio frequency module or an antenna) in the network device, and then sent by the module to the terminal device.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general purpose processor may be a microprocessor or any regular processor or the like.

The method steps in embodiments of this application may be implemented in hardware, or may be implemented in software instructions that may be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. The storage medium may alternatively be a component of the processor. The processor and the storage medium may be disposed in an ASIC. In addition, the ASIC may be located in a base station or a terminal. Certainly, the processor and the storage medium may exist in a base station or terminal as discrete components.

All or a part of the foregoing embodiments may be implemented by software, hardware, firmware, or any combination thereof. When software is used to implement the embodiments, all or a part of the embodiments may be implemented in a form of a computer program product. The computer program product includes one or more computer programs or instructions. When the computer programs or instructions are loaded and executed on a computer, the procedures or functions in embodiments of this application are all or partially executed. The computer may be a general-purpose computer, a special-purpose computer, a computer network, a network device, user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In various embodiments of this application, unless otherwise stated or if there is a logic conflict, terms and/or descriptions in different embodiments are consistent and may be mutually referenced, and technical features in different embodiments may be combined into a new embodiment based on an internal logical relationship thereof.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. A part or all of the units may be selected based on actual requirements to achieve the objectives of the solutions of embodiments.

## Claims

1. A physical downlink control channel PDCCH monitoring method, comprising:
obtaining a first discontinuous reception DRX parameter and a second DRX parameter, wherein the first DRX parameter is used to configure a first DRX, a start time of a first cycle period of the first DRX is t1, the second DRX parameter is used to configure a second DRX, a start time of a second cycle period of the second DRX is t2, and t1 is earlier than t2; and
when a time difference between t1 and t2 is less than a first threshold, initiating PDCCH monitoring at a time t3, wherein t3 is no later than t2 and is later than t1.

2. The method according to claim 1, wherein t3 is equal to t2.

3. The method according to claim 1, wherein t3 = t1 + P, and P is configured by a network device.

4. The method according to any one of claims 1 to 3, wherein the second cycle period is a cycle period of the second RDX and that is closest to the start time of the first cycle period.

5. The method according to any one of claims 1 to 4, wherein the first threshold is configured by the network device.

6. The method according to claim 5, wherein that the first threshold is configured by the network device comprises:
the first threshold is configured by the network device in the first DRX parameter and the second DRX parameter; or
the first threshold is configured by the network device in the first DRX parameter.

7. A physical downlink control channel PDCCH monitoring method, comprising:
obtaining a first discontinuous reception DRX parameter and a second DRX parameter, wherein the first DRX parameter is used to configure a first DRX, and the second DRX parameter is used to configure a second DRX; and
when an overlapping period between a first on duration time of the first DRX and a second on duration time of the second DRX occupies a proportion of the first on duration time greater than a second threshold, skipping PDCCH monitoring during a non-overlapping portion of the first on duration time with respect to the second on duration time.

8. The method according to claim 7, wherein the second threshold is configured by a network device.

9. A communication apparatus, comprising:
an interface unit, configured to obtain a first discontinuous reception DRX parameter and a second DRX parameter, wherein the first DRX parameter is used to configure a first DRX, a start time of a first cycle period of the first DRX is t1, the second DRX parameter is used to configure a second DRX, a start time of a second cycle period of the second DRX is t2, and t1 is earlier than t2; and
a processing unit, configured to: when a time difference between t1 and t2 is less than a first threshold, initiating PDCCH monitoring at a time t3, wherein t3 is no later than t2 and is later than t1.

10. The apparatus according to claim 9, wherein t3 is equal to t2.

11. The apparatus according to claim 9, wherein t3 = t1 + P, and P is configured by a network device.

12. The apparatus according to any one of claims 9 to 11, wherein the second cycle period is a cycle period of the second RDX and that is closest to the start time of the first cycle period.

13. The apparatus according to any one of claims 9 to 12, wherein the first threshold is configured by the network device.

14. The apparatus according to claim 13, wherein that the first threshold is configured by the network device comprises:
the first threshold is configured by the network device in the first DRX parameter and the second DRX parameter; or
the first threshold is configured by the network device in the first DRX parameter.

15. A communication apparatus, comprising:
an interface unit, configured to obtain a first discontinuous reception DRX parameter and a second DRX parameter, wherein the first DRX parameter is used to configure a first DRX, and the second DRX parameter is used to configure a second DRX; and
a processing unit, configured to: when an overlapping period between a first on duration time of the first DRX and a second on duration time of the second DRX occupies a proportion of the first on duration time greater than a second threshold, skip PDCCH monitoring during a non-overlapping portion of the first on duration time with respect to the second on duration time.

16. The apparatus according to claim 15, wherein the second threshold is configured by a network device.

17. A computer-readable storage medium, wherein the computer-readable storage medium stores instructions, and when the instructions are run on a processor, the method according to any one of claims 1 to 6 or the method according to any one of claims 7 and 8 is implemented.

18. A computer program product, wherein when the computer program product is executed on a computer, the method according to any one of claims 1 to 6 or the method according to any one of claims 7 and 8 is implemented.

19. A communication apparatus, comprising a module configured to perform the method according to any one of claims 1 to 6, or a module configured to perform the method according to claim 7 or 8.

20. A communication apparatus, comprising a processor, wherein the processor is coupled to a memory, and when instructions stored in the memory are run on the processor, the apparatus is enabled to implement the method according to any one of claims 1 to 6, or the apparatus is enabled to implement the method according to claim 7 or 8.
